Europäisches Patentamt

European Patent Office

Office européen des brevets

(19)

(11) Publication number: **0 376 638**
**A2**

# EUROPEAN PATENT APPLICATION

(21) Application number: **89313481.7**

(51) Int. Cl.⁵: **B01D 19/00, B29D 23/22**

(22) Date of filing: **21.12.89**

(30) Priority: **29.12.88 JP 170959/88**

(43) Date of publication of application:
**04.07.90 Bulletin 90/27**

(84) Designated Contracting States:
**AT BE CH DE ES FR GB GR IT LI LU NL SE**

(71) Applicant: **JAPAN GORE-TEX, INC.**
**42-5, 1-chome Akazutsumi**
**Setagaya-ku Tokyo 156(JP)**

(72) Inventor: **Chikamori, Yoshihiro c/o Japan**
**Gore-Tex, Inc.**
**Okayama Plant 123, Minamigata**
**Yoshinaga-Cho**
**Wake-gun Okayama-ken 709-02(JP)**
Inventor: **Shibata, Yoshihiko c/o Japan**
**Gore-Tex, Inc.**
**Okayama Plant 123, Minamigata**
**Yoshinaga-Cho**
**Wake-gun Okayama-ken 709-02(JP)**
Inventor: **Shimizu, Yoichi c/o Japan Gore-Tex,**
**Inc.**
**Okayama Plant 123, Minamigata**
**Yoshinaga-Cho**
**Wake-gun Okayama-Ken 709-02(JP)**

(74) Representative: **Knott, Stephen Gilbert et al**
**MATHISEN, MACARA & CO. The Coach**
**House 6-8 Swakeleys Road**
**Ickenham Uxbridge Middlesex UB10 8BZ(GB)**

(54) A degassing tube for solvents.

(57) A degassing tube for solvents comprising a porous Polytetrafluoroethylene tube (1) having a fluorosilicone lining (2) formed by coating the interior surface of the tube (1) or by inserting a fluorosilicone tube (2a) into the PTFE tube. Alternatively a porous PTFE tube may be impregnated by fluorosilicone to form the degassing tube.

Figure 1.

## A DEGASSING TUBE FOR SOLVENTS

The present invention relates to a degassing tube for solvents which provides good solvent resistance and good degassing performance.

Known solvent degassing tubes are usually made of non-porous polytetrafluoroethylene, and are usually used by passing the solvent that is to be degassed through the interior of the tube under prescribed vacuum conditions.

In the case of these conventional devices, the degassing efficiency is extremely poor. For example, for non-porous polytetrafluoroethylene tubes with an external diameter of from 1.6 to 7.0 mm, an internal diameter of from 1.0 to 6.0 mm, and a wall thickness of approximately 0.2 to 0.5 mm, used in a pretreatment for a liquid chromatograph at treatment rates from approximately 1 to 2 cc/min, the degassing efficiency is only a few percent. In one specific example the degassing efficiency is about 3% in the case of a tube with an external diameter of 6.4 mm and an internal diameter of 6.0 mm, through which methyl ethyl ketone is caused to flow at a rate of 0.3 cc/cm$^2$ mm (degree of vacuum: 20 torr, liquid temperature: 19°C). Since the degassing efficiency is so low, repeated degassing treatments must be performed in order to obtain the desired degassing effect. As a result, the number of treatment steps required, and hence the treatment time, is unavoidably high.

For this reason, the use of tubes made of materials other than polytetrafluoroethylene has been considered for solvent degassing, but in such cases the solvent resistance is low and adequate durability cannot be obtained.

The present invention overcomes these problems by suitably combining a fluorosilicone with a porous polytetrafluoroethylene tube to provide a solvent degassing tube which is resistant to solvents and exhibits a high degassing performance.

The fluorosilicone may be combined with the porous polytetrafluoroethylene tube either by impregnating the porous polytetrafluoroethylene tube with fluorosilicone or by installing a fluorosilicone lining on the inside surface of the porous polytetrafluoroethylene tube. The intallation of the fluorosilicone lining can easily be accomplished either by coating the inside surface of the porous polytetrafluoroethylene tube with a layer of fluorosilicone or by inserting a separately formed fluorosilicone tube within the polytetrafluoroethylene tube.

Preferably the porous polytetrafluoroethylene tube has been made porous by a drawing process, providing a desirable strength as a result of fibrilization.

Embodiments of the invention will now be described, by way of example, with reference to the accompanying diagrammatic drawings, in which:-

Figure 1 is a partly cut-away perspective view (not to scale) of one example of a degassing tube in accordance with the present invention; and

Figure 2 is a view similar to that of Figure 1, but showing another example of a degassing tube in accordance with the invention.

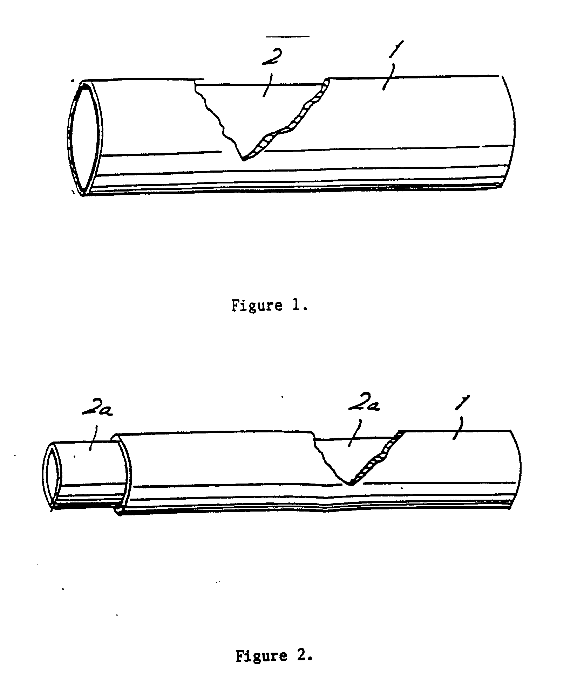

In the example illustrated in Figure 1, a fluorosilicone lining layer (2) is formed on the inside surface of a porous polytetrafluoroethylene tube (1), for example by spraying.

In the example illustrated in Figure 2, a composite degassing tube is formed by fitting a fluorosilicone tube (2a) into a porous polytetrafluoroethylene tube (1) substantially in contact with the inside surface thereof.

In some cases, it would also be possible to impregnate a porous polytetrafluoroethylene tube (1) with fluorosilicone.

The porous polytetrafluoroethylene tube (1) may be of any desired size, but generally the size of the tube will be from about 2 to 10 mm (preferably from 4 to 8 mm), and the porosity of the tube may be from about 30 to 90% (preferably from 40 to 60%). The thickness of the fluorosilicone lining layer (2) or (2a) may be from about 0.05 to 0.5 mm (preferably from 0.08 to 0.3 mm).

In one example of the manufacture of a degassing tube of the type shown in Figure 1, a mixture produced by adding a bridging agent to an unbridged fluorsilicone monomer (amount of bridging agent: 5%) was caused to flow for 5 minutes at a pressure of 5 kg/cm$^2$ through a porous polytetrafluoroethylene tube of external diameter 7.2 mm, internal diameter 6.0 mm, length 10 m, porosity 50%, and pore size 2 microns, so that a fluorosilicone lining layer was formed on the inside surface of the porous polytetrafluoroethylene. This lined tube was then subjected to heat for 4 hours at 150°C, producing the degassing tube. The thickness of the interior fluorosilicone lining layer was 100 microns. No change in weight was observed when this tube was immersed in methyl ethyl ketone for 24 hours, thus confirming that the tube possessed good solvent resistance.

Furthermore, when a degassing treatment was performed by causing methyl ethyl ketone solvent to flow through this tube at a flow rate of 100 ml/min (liquid temperature: 25°C, degree of vacuum: 60 Torr), an extremely high degassing efficiency of 62% was obtained.

In an example of the manufacture of a composite degassing tube of the type shown in Figure 2, a fluorosilicone tube of external diameter 5.8 mm and internal diameter 5.4 mm was inserted into and joined to the inside surface of a porous polytetrafluoroethylene tube similar to that used in the previous example.

When the degassing efficiency of the resulting composite tube was measured by causing a solvent to flow through under the same conditions as in the previous example, a value of approximately 50% was obtained. Thus, it was confirmed that this tube also had high degassing efficiency.

As described above, the present invention makes it possible to obtain a solvent degassing tube which has good solvent resistance and which also has a high degassing efficiency. Efficient degassing can be performed smoothly using such tubes, and the present invention accordingly has great practical merit.

## Claims

1. A degassing tube for solvents comprising a porous polytetrafluoroethylene tube (1) having an interior lining (2;2a) of fluorosilicone.

2. A degassing tube according to claim 1, wherein the fluorosilicone lining is formed by a coating (2) of the fluorosilicone on the inner surface of the polytetrafluoroethylene tube (1).

3. A degassing tube according to claim 1, wherein the fluorosilicone lining is formed by a fluorosilicone tube (2a) fitted inside the polytetrafluoroethylene tube (1).

4. A degassing tube according to any one of claims 1 to 3, in which the thickness of the fluorosilicone lining is from 0.05 mm to 0.5 mm.

5. A degassing tube for solvents comprising a porous polytetrafluoroethylene tube (1) impregnated with fluorosilicone.

Figure 1.

Figure 2.